# EUROPÄISCHE PATENTANMELDUNG

(11) **EP 1 074 295 A1**
(43) Veröffentlichungstag der Anmeldung: **07.02.2001**
(21) Anmeldenummer: 00810587.6
(22) Anmeldetag: 05.07.2000
(51) Int. Cl.: B01J 19/24, B01F 3/04, B01F 5/04, C12M 1/08

(54) **Umlaufreaktor für Fluide unterschiedlicher Dichte**

(30) Priorität: 04.08.1999 EP 99810696
(71) Anmelder: Sulzer Chemtech AG, 8404 Winterthur (CH)
(72) Erfinder: Fischer, Thomas Uwe, 78239 Rielasingen-Worblingen (DE)
(74) Vertreter: Sulzer Management AG

(57) **Zusammenfassung**

Im Umlaufreaktor (1) für Fluide (5, 6) unterschiedlicher Dichte ist ein erstes Fluid (5) in ein zweites Fluid (6) als disperse Phase einbringbar. Der Reaktor (1) umfasst einen Aussenbehälter (10), Einbauten (2) in einem Innenrohr (21) und am einen Ende des Innenrohrs eine Zufuhrstelle (30) für das erste Fluid. Erfindungsgemäss sind eine Mehrzahl von Innenrohren (21, ... 24) mit Einbauten und entsprechenden Zufuhrstellen (30) im Aussenbehälter parallel angeordnet. Die Zufuhrstellen sind Teile eines an eine Hauptzuleitung (33) angeschlossenen Verteilers (3), der so ausgebildet ist, dass in einem Teillastbetrieb des Reaktors nur ein Teil der Zufuhrstellen das erste Fluid austreten lassen. Ein Einsetzen bzw. Aussetzen der Fluidabgabe bei einzelnen oder allen Zufuhrstellen erfolgt selbsttätig ohne eine von Aussen einwirkende Steuerung und/oder im Verteiler sind zumindest teilweise Organe (9) zur Steuerung der Fluidabgabe angeordnet.

## Beschreibung

Die Erfindung betrifft einen Umlaufreaktor für Fluide unterschiedlicher Dichte gemäss Oberbegriff von Anspruch 1 sowie Verwendungen des Reaktors.

Es ist ein Oxidationsreaktor in Form einer Blasenkolonne bekannt (R. Ehrat, Chemie-Technik, 1976, S. 467), der zur Durchführung von Gas-Flüssig-Reaktionen geeignet ist. Er umfasst einen Aussenbehälter und ein mit statischen Mischelementen gefülltes Innenrohr. Die Reaktionskomponenten - flüssig bzw. gasförmig - werden am Fuss des Innenrohrs mittels grober Verteiler eingebracht. Eine Rezirkulation im Reaktor bewirkt in den statischen Mischelementen aufgrund von Scherkräften in den nach oben strömenden Fluiden ein stabiles Blasenbett. Erforderlich für ein solches Blasenbett ist, dass der Durchmesser D des statischen Mischers kleiner als 2/3 L ist, wobei L die gesamte Länge der durch die statischen Mischelemente gebildeten Mischerstruktur ist; d. h. es muss die Bedingung L/D > 1.5 erfüllt sein. Ein Unterschied zwischen den Dichten der Flüssigkeit in einem Ringspalt um das Innenrohr und des Zweiphasen-Gemisches im Innenrohr treibt die genannte Rezirkulation an (Mammutpumpeneffekt).

Entsprechendes gilt auch für andere Umlaufreaktoren mit Fluiden unterschiedlicher Dichte, wie beispielsweise Extraktionskolonnen zur Durchführung von Flüssig-Flüssig-Extraktionen. Ist eine erste Flüssigkeit, die in einer zweiten Flüssigkeit als disperse Phase eingebracht werden soll, schwerer, so muss die Zufuhrstelle für die erste Flüssigkeit am oberen Ende des Innenrohrs angeordnet sein.

Je grösser die Mengen der zur Reaktion zu bringenden Komponenten sind, desto höher muss der Reaktor wegen der genannten Bedingung ausgebildet sein. Wenn ausserdem diese Komponenten in variablen Mengen für die Reaktion zur Verfügung stehen, so kann es Verteilprobleme im Innenrohr geben. Dies gilt beispielsweise dann, wenn bei Teillast eine kleinere Gasmenge zur Verfügung steht.

Aufgabe der Erfindung ist es, einen kostengünstigen und einfach zu betreibenden Umlaufreaktor für Fluide unterschiedlicher Dichte zu schaffen, in dem einerseits grosse Mengen an Fluiden miteinander in Kontakt gebracht werden können und der andererseits auch bei einer Teillast effizient betreibbar ist. Diese Aufgabe wird durch den im Anspruch 1 definierten Reaktor gelöst.

Im Umlaufreaktor für Fluide unterschiedlicher Dichte ist ein erstes Fluid in ein zweites Fluid als disperse Phase einbringbar. Der Reaktor umfasst einen Aussenbehälter, Einbauten in einem Innenrohr und am einen Ende des Innenrohrs eine Zufuhrstelle für das erste Fluid. Erfindungsgemäss sind eine Mehrzahl von Innenrohren mit Einbauten und entsprechenden Zufuhrstellen im Aussenbehälter parallel angeordnet. Die Zufuhrstellen sind Teile eines an eine Hauptzuleitung angeschlossenen Verteilers, der so ausgebildet ist, dass in einem Teillastbetrieb des Reaktors nur ein Teil der Zufuhrstellen das erste Fluid austreten lassen. Ein Einsetzen bzw. Aussetzen der Fluidabgabe bei einzelnen oder allen Zufuhrstellen erfolgt selbsttätig ohne eine von Aussen einwirkende Steuerung und/oder im Verteiler sind zumindest teilweise Organe zur Steuerung der Fluidabgabe angeordnet.

In einem erfindungsgemässen Reaktor, bei dem das erste Fluid ein Gas ist, das bei Teillast in einer kleineren Menge zur Verfügung steht, wird nur in einem Teil der Innenrohre jeweils ein Blasenbett erzeugt. Bei dieser Betriebsart ist die Qualität der einzelnen Blasenbetten besser, als wenn mit der Gasmenge der Teillast nur in einem einzigen Innenrohr ein Blasenbett erzeugt würde. Ausserdem wird ein Reaktor mit statischen Mischern in der Regel kostengünstiger, da die Längen L der Mischer dank kleinerer Durchmesser D kürzer gewählt werden können, als wenn der Reaktor gemäss dem Stand der Technik nur ein Innenrohr enthalten würde.

Die abhängigen Ansprüche 2 bis 8 beziehen sich auf vorteilhafte Ausführungsformen des erfindungsgemässen Reaktors. Gegenstand der Ansprüche 9 und 10 ist die Verwendung des Reaktors, insbesondere zur Durchführung verschiedener konkreter Verfahren.

Nachfolgend wird die Erfindung anhand der Zeichnungen erläutert. Es zeigen:
- Fig. 1: einen erfindungsgemässen Reaktor mit vier Innenrohren,
- Fig. 2: ein Diagramm zur Erläuterung der Betriebsweise des in Fig. 1 abgebildeten Reaktors,
- Fig. 3-6: entsprechende Diagramme mit Versuchsergebnissen,
- Fig. 7a-f: Illustrationen zum Verhalten eines Gasverteilers mit siphonartig ausgebildeten Zufuhrstellen, acht Zustände a bis f darstellend,
- Fig. 8: ein Diagramm mit Gasdrücken pᵢ für die acht Zustände i = a, ... f und
- Fig. 9: einen Teil eines Gasverteilers eines erfindungsgemässen Reaktors.

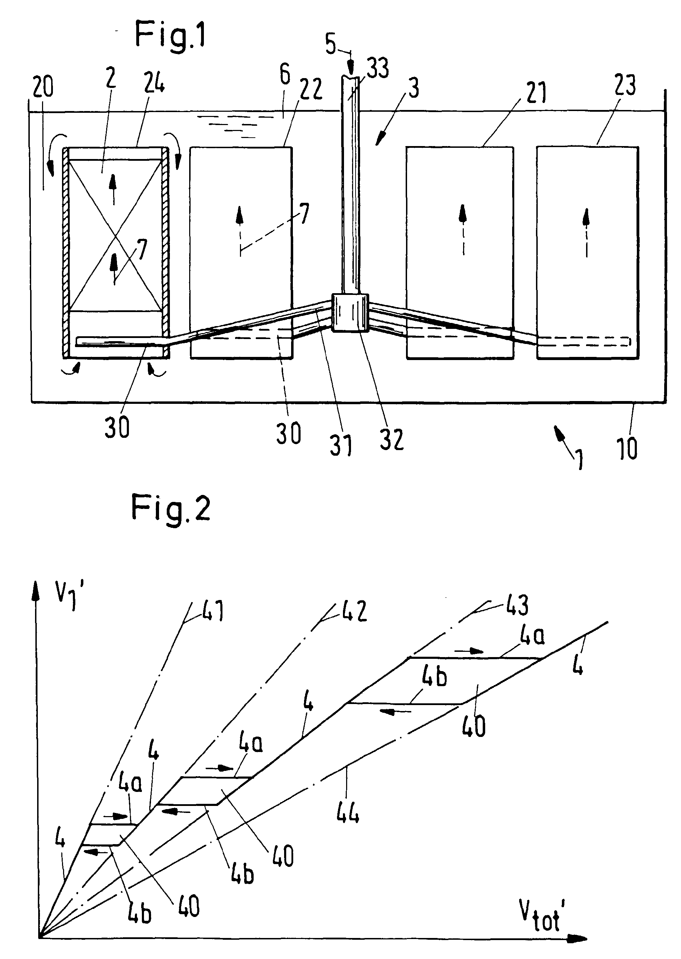

Der Umlaufreaktor 1 der Fig. 1 umfasst einen Aussenbehälter 10 und vier Einbauten 2 enthaltende Innenrohre 21, 22, 23 und 24, wobei die Einbauten 2 mit Vorteil statische Mischer sind. An den unteren Enden der Innenrohre 21, ... 24 befinden sich jeweils eine Zufuhrstelle 30 für ein erstes Fluid 5, dessen Dichte kleiner als die Dichte eines zweiten Fluids 6 ist. Die Fluide sind ein Gas 5 bzw. eine Flüssigkeit 6. Liegen die Einbauten 9 als statische Mischer vor, so sind diese jeweils aus einer Vielzahl von übereinander angeordneten, nicht dargestellten Elementen aufgebaut (vgl. z. B. die oben genannte Publikation von R. Ehrat). Die Innenrohre 21, ... 24 mit ihren Einbauten 2 sind alle weitgehend gleich ausgebildet. Ein Dichteunterschied zwischen der Dichte der Flüssigkeit 6 ausserhalb der Innenrohre 21, ... 24 (Bereich 20) und jener eines Zweiphasen-Gemisches 7 in den Einbauten 2 treibt eine Umlaufströmung an, die durch Pfeile angedeutet ist.

Die Zufuhrstellen 30 sind Teile eines Verteilers 3, der an eine Hauptzuleitung 33 angeschlossen ist. Dieser Verteiler 3 ist so ausgebildet, dass in einem Teillastbetrieb des Reaktors 1 nur ein Teil der Zufuhrstellen 30 das Gas 5 austreten lassen. Ein Einsetzen bzw. Aussetzen der Gasabgabe erfolgt bei den einzelnen Zufuhrstellen 30 selbsttätig, d. h. ohne eine von Aussen einwirkende Steuerung. Dies geschieht, da die Zufuhrstellen 30 Austrittsöffnungen für das Gas 5 haben, die auf verschiedenen Niveaus angeordnet sind. Die Höhenunterschiede der Niveaus sind klein - in der Grössenordnung von einem Millimeter oder mehreren Millimetern. Bei wechselnder Teillast erfolgt das Einsetzen bzw. Aussetzen der Gasabgabe bei den einzelnen Zufuhrstellen 30 nach einer durch die Niveauhöhen festgelegten Reihenfolge. Die Zufuhrstelle 30 des Innenrohrs 21 hat das höchste Niveau; dort findet die Gaszufuhr zuerst statt. Wird die Gaszufuhr verstärkt, so beschränkt sich zunächst die Gasbelastung auf dieses erste Innenrohr 21. Bei einer weiteren Verstärkung des Gaszufuhr setzt die Gasabgabe auch im Innenrohr 22 ein, bei dem das Niveau der Zufuhrstelle 30 etwas tiefer angeordnet ist. In gleicher Weise folgt das Innenrohr 23 und schliesslich das Innenrohr 24, bei dem das Niveau der Zufuhrstelle 30 am tiefsten angeordnet ist. Wenn alle genannten Niveaus praktisch auf gleicher Höhe liegen, so ergibt sich eine weitgehend gleich verteilte Gasabgabe auf die begasten Innenrohre, d. h. die Innenrohre, in denen sich ein Blasenbett ausgebildet hat.

Die Zufuhrstellen 30 sind jeweils über ein Zulaufrohr 31 mit einer zentral angeordneten Verteilkammer 32 verbunden, die an die Hauptzuleitung 33 angeschlossen ist. In Fig. 1 sind der Anschaulichkeit halber die Innenrohre 21, ... 24 in einer Reihe angeordnet dargestelllt, wobei die Innenrohre 21 und 22 noch etwas nach hinten zurückversetzt sind. In der Praxis ist es in der Regel vorteilhafter, die Innenrohre 21, ... 24 in einem kreiszylindrischen Aussenbehälter 10 symmetrisch in gleichen Abständen von einer zentralen Verteilkammer 32 anzuordnen.

Die Zufuhrstellen 30 können jeweils eine oder mehrere Austrittsöffnungen aufweisen. Das erste Fluid 5 wird in Einbauten 2 der Innenrohre 21, ... 24 zerkleinert, so dass das Fluid 5 dispergiert in Form von kleinen Blasen oder Tropfen mit dem anderen Fluid 6 Grenzflächen bildet.

Bei einer fehlenden Gaszufuhr kann Flüssigkeit 6 des Reaktors 1 zumindest teilweise in den Verteiler 3 eindringen. Die Zufuhrstellen 30 sind mit Vorteil so ausgebildet, dass die Flüssigkeit 6 beim Einspeisen des Gases 5 aus dem Verteiler 3 verdrängt wird.

In dem Diagramm der Fig. 2 sind für einen erfindungsgemässen Reaktor 1 mit vier symmetrisch angeordneten und gleich ausgebildeten Innenrohren 21, ... 24 dargestellt, wie sich der Teilvolumenstrom V₁' des durch das Innenrohr 21 strömenden Gases 5 in Abhängigkeit von dem gesamten Volumenstrom Vₜₒₜ' verändert. Dabei ist eine Gleichverteilung über die einzelnen begasten Innenrohre 21, ... 24 vorausgesetzt. Solange nur das Innenrohr 21 begast ist, gilt offensichtlich die im Diagramm (Fig. 2) als strichpunktierte Linie 41 dargestellte Abhängigkeit V₁' = Vₜₒₜ'. Ist ausser dem Innenrohr 21 auch das Innenrohr 22 begast, so gilt V₁' = ½ Vₜₒₜ' (Linie 42). Entsprechend gilt V₁' = 1/3 Vₜₒₜ' (Linie 43) und V₁' = ¼ Vₜₒₜ' (Linie 44), wenn die drei Innenrohre 21, 22 und 23 bzw. alle Innenrohre 21, ... 24 begast sind. Die ausgezogen gezeichneten Linienstücke 4 geben die Volumenströme an, die realisierbar sind. Bei den Übergängen zwischen Betriebszuständen, die sich durch eine unterschiedliche Anzahl an begasten Innenrohren unterscheiden, ergeben sich Hystereseeffekte, denen Vierrecke 40 im Diagramm entsprechen. Ein Übergang 4a, bei dem die Begasung eines zusätzlichen Innenrohrs erfolgt, findet bei einem Volumenstrom V₁' statt, der grösser ist als jener, den man bei einem umgekehrten Übergang 4b feststellt.

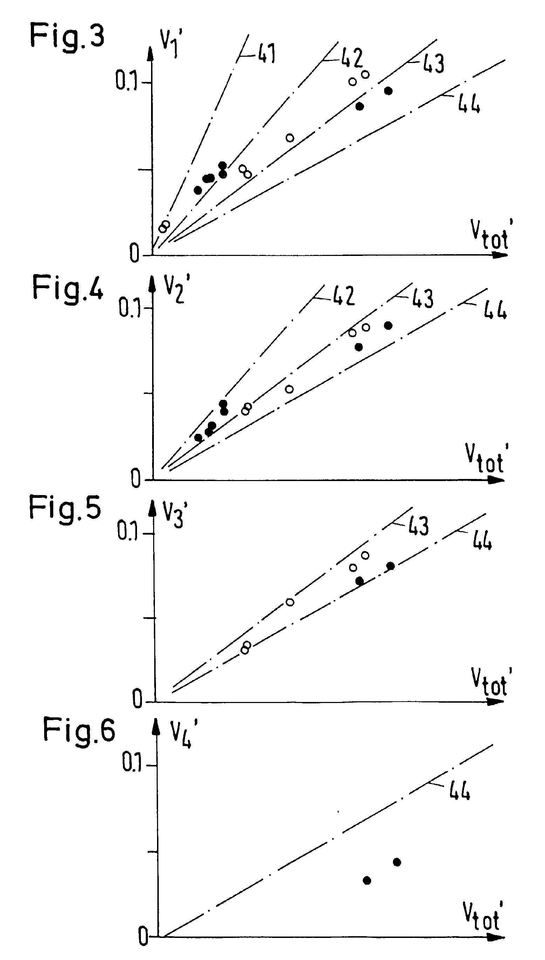

Fig. 3 zeigt das Diagramm der Fig. 2 mit experimentell bestimmten Werten, wobei die theoretisch realisierbaren Volumenströme (Linienstücke 4 in Fig. 2) nicht mehr angegeben sind. Diese experimentellen Werte wurden mittels einer Versuchsanordnung gemacht (mit Luft, Wasser und vier statischen Mischern, deren Durchmesser 5 cm und Höhen 15 cm betrugen) bei der die Niveauabstufung der Gaszufuhrstellen 30 pro Stufe 2 mm betrug. Es sind vier Gruppen von Messpunkten unterscheidbar (durch volle bzw. leere Kreise markiert). Diese vier Gruppen entsprechen den vier Betriebszuständen mit einem, zwei, drei oder vier begasten Innenrohren 21, ... 24 und sollten im Idealfall auf den vier Linien 41, ... 44 liegen.

Fig. 4 zeigt Messwerte für den Volumenstrom V₂', die sich bei Messungen am zweiten Innenrohr 22 ergeben haben. Da das Innenrohr 22 gleichzeitig mit mindestens einem zweiten, nämlich dem Innenrohr 21 begast ist, haben sich nur noch drei Gruppen von Messwerten ergeben. Entsprechend sind nur noch die drei Linien 42, 43 und 44 im Diagramm eingezeichnet worden. Messungen für das Innenrohr 23 (Volumenstrom V₃') und das Innenrohr 24 (Volumenstrom V₄') sind entsprechend in den Figuren 5 und 6 dargestellt. Die Abweichungen der Messwerte von den Linien 41, ... 44 sind hauptsächlich Folgen der Niveauabstufungen der Gaszufuhrstellen 30.

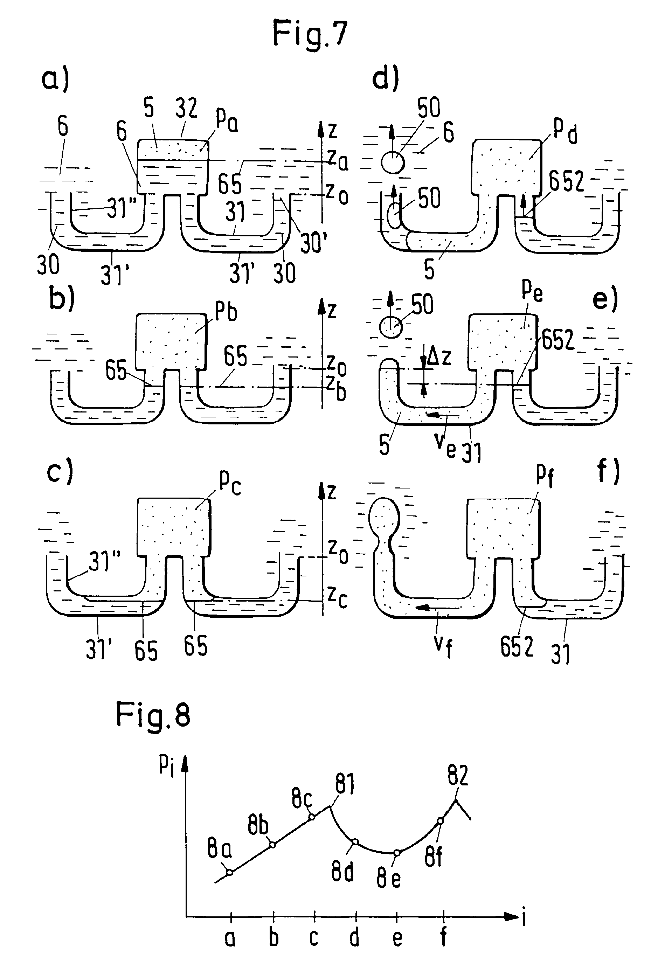

Die Gaszufuhrstellen 30 können alle auf dem gleichen - d. h. weitgehend gleichen und nicht exakt gleichen - Niveau angeordnet sein. Minimale Niveauunterschiede, die Zufallsgrössen darstellen, ergeben dann die Reihenfolge für die Übergänge zwischen den oben genannten Betriebszuständen. Wenn der Gasverteiler 3 mit siphonartigen Zufuhrstellen 30 ausgebildet ist - siehe Fig. 7 -, so bilden sich stabile Betriebszustände aus, wie nachfolgend anhand der Figuren 7 und 8 erläutert wird:

Zwei Austrittsöffnungen 30' des Verteilers 3 befinden sich auf dem gleichen Niveau z = z₀. Sie sind mit der Verteilerkammer 32 über siphonförmige Rohrstücke 31 verbunden, die jeweils einen waagrechten Abschnitt 31' und einen senkrechten Abschnitt 31" aufweisen. Im Zustand a (Fig. 7a) befindet sich Gas 5 mit einem Druck pₐ (Punkt 8a in Fig. 8) im oberen Teil der Kammer 32 über einem Niveau 65, z = zₐ, der Flüssigkeit 6. Über eine nicht dargestellte Leitung wird Gas 5 zugeführt, wobei der Gasdruck p ansteigt.

Mit steigendem Gasdruck p sinkt das Niveau 65 ab: Zustand b mit z = z_{b} und p = p_{b} (Punkt 8b in Fig. 8). Das Niveau 65 sinkt weiter ab und erreicht den waagrechten Rohrabschnitt 31': z = z_{c}, p = p_{c}, Zustand c. Es ist angenommen, dass der links liegende Rohrabschnitt 31' etwas höher als der rechts liegende ist. Bei einer weiteren Zufuhr an Gas 5 ergibt sich nun ein Gasdurchbruch auf der linken Seite: Zustand d. Gas 5 entweicht in Form von Blasen 50 durch den senkrechten Abschnitt 31". Vor dem Gasdurchbruch ist der Gasdruck maximal: Punkt 81 in Fig. 8. Anschliessend fällt er auf einen tieferen Wert p_{d} ab: Punkt 8d in Fig. 8. Das Flüssigkeitsniveau 652 bewegt sich nach oben.

Gas 5 strömt mit einer Geschwindigkeit v = vₑ - Zustand e - durch das linke Rohrstück 31. Bei einer Vergrösserung der Gaszufuhr vergössert sich entsprechend die Strömungsgeschwindigkeit v sowie der Druck p, während das Niveau 652 sich wieder nach unten bewegt: v = v_{f}, p = p_{f}, Zustand f. Kurz nach diesem Zustand f erfolgt auch im rechten Rohrstück 31 der Gasdurchbruch: Punkt 82 in Fig. 8.

Man könnte den ersten Gasdurchbruch auf der linken Seite mittels eines Eingriffs von aussen verhindern. Dann würde ein Gasdurchbruch zuerst auf der rechten Seite eintreten. Auch nach Rücknahme des Eingriffs würde die Gasabgabe weiter stabil über die rechte Seite erfolgen (spiegelbildliche Situation zu den Zuständen d, e und f in Fig. 7). Ein zweiter Gasdurchbruch würde sich dann nach einer weiteren Vergrösserung der Gaszufuhr auf der linken Seite ergeben.

Diese Überlegungen lassen sich einfach für einen Verteiler mit drei und mehr siphonartig ausgebildeten Zufuhrstellen 30 verallgemeinern. Bei diesen ergeben sich entsprechend drei oder mehr stabile Betriebszustände.

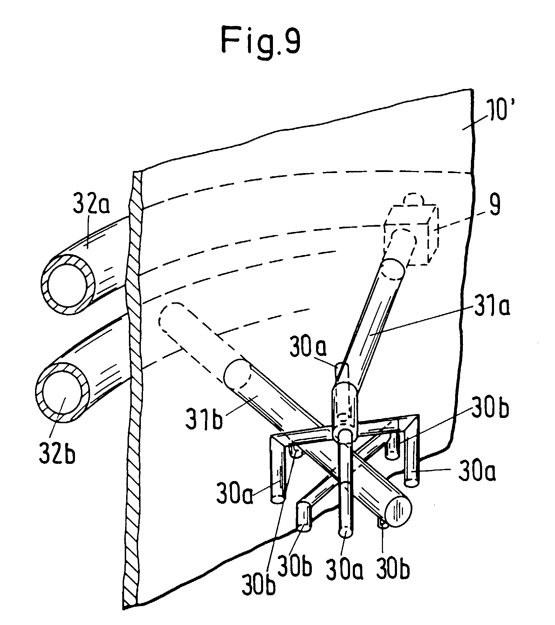

Die Verteilkammer 32 ist im Ausführungsbeispiel der Fig. 1 zentral im Aussenbehälter 10 angeordnet. Sie kann aber auch als Ringleitung ausgebildet sein, die den Aussenbehälter 10 ganz oder teilweise umschliesst. Fig. 9 zeigt ein Beispiel. Bei diesem Beispiel ist es vorgesehen, dass zwei verschiedene Gase über zwei Ringleitungen 32a und 32b ausserhalb einer Behälterwand 10' auf Gaszufuhrstelle 30a bzw. 30b über Leitungen 31a bzw. 31b auf einzelne nicht dargestellte Innenrohre verteilt werden. Alle Gaszufuhrstellen 30a und 30b sind gegen unten gerichtet und ihre Austrittsöffnungen sind auf dem gleichen Niveau angeordnet.

Das Einsetzen bzw. Aussetzen der Fluidabgabe bei den einzelnen Zufuhrstellen kann auch durch eine externe Steuerung erfolgen. In Fig. 9 ist ein Organ 9 zur Steuerung der Fluidabgabe angedeutet, das in der Leitung 31a angeordnet ist. Das Organ 9 ist beispielsweise ein Ventil. Auch die Leitung 31b kann ein solches Organ 9 enthalten.

Der erfindungsgemässe Reaktor eignet sich zur Durchführung folgender chemischen Reaktionen: Oxidationen, insbesondere Sulfit-Oxidation, Ozonierungen, Chlorierungen, Hydrierungen, Phosgenierungen, EDC-Produktion oder Vynil-Chlor-Monomer-Produktion. Bei der EDC-Produktion erfolgt eine Reaktion zwischen in EDC (Ethylendichlorid) gelöstem Chlor und Ethylen. Es ist auch die Durchführung von Reaktionen mit Mikroorganismen möglich.

## Patentansprüche

1. Umlaufreaktor (1) für Fluide (5, 6) unterschiedlicher Dichte, wobei ein erstes Fluid (5) in ein zweites Fluid (6) als disperse Phase einbringbar ist, welcher Reaktor (1) einen Aussenbehälter (10), Einbauten (2) in einem Innenrohr (21) und am einen Ende des Innenrohrs eine Zufuhrstelle (30) für das erste Fluid umfasst,
dadurch gekennzeichnet, dass eine Mehrzahl von Innenrohren (21, ... 24) mit Einbauten und entsprechenden Zufuhrstellen (30) im Aussenbehälter parallel angeordnet sind, dass die Zufuhrstellen Teile eines an eine Hauptzuleitung (33) angeschlossenen Verteilers (3) sind, der so ausgebildet ist, dass in einem Teillastbetrieb des Reaktors nur ein Teil der Zufuhrstellen das erste Fluid austreten lassen und dass ein Einsetzen bzw. Aussetzen der Fluidabgabe bei einzelnen oder allen Zufuhrstellen selbsttätig ohne eine von Aussen einwirkende Steuerung erfolgt und/oder dass im Verteiler zumindest teilweise Organe (9) zur Steuerung der Fluidabgabe angeordnet sind.

2. Reaktor nach Anspruch 1, dadurch gekennzeichnet, dass die Zufuhrstellen (30) über jeweils ein Zulaufrohr (31) mit einer Verteilkammer (32) verbunden sind, die an die Hauptzuleitung (33) angeschlossen ist, wobei alle Zufuhrstellen mit jeweils ihrem Zulaufrohr weitgehend gleich ausgebildet sind und die Verteilkammer beispielsweise eine im Aussenbehälter (10) zentral angeordnete Kammer ist oder eine den Aussenbehälter zumindest teilweise umschliessende Ringleitung (32a) ist.

3. Reaktor nach Anspruch 1 oder 2, dadurch gekennzeichnet, dass der Verteiler (3) so ausgebildet ist, dass bei einer fehlenden Zufuhr des ersten Fluids (5) das andere Fluid (6) zumindest teilweise in den Verteiler eindringen kann und dass die Zufuhrstellen (30) derart ausgebildet sind, dass bei Einspeisen des ersten Fluids dieses das andere aus dem Verteiler verdrängt.

4. Reaktor nach einem der Ansprüche 1 bis 3, dadurch gekennzeichnet, dass die Zufuhrstellen (30) Austrittsöffnungen (30') für das erste Fluid haben, die auf verschiedenen Niveaus angeordnet sind, wobei die Höhenunterschiede der Niveaus klein - rund ein oder mehrere Millimeter - sind, so dass bei wechselnder Teillast das Einsetzen bzw. Aussetzen der Fluidabgabe bei den einzelnen Zufuhrstellen nach einer durch die Niveauhöhen festgelegten Reihenfolge erfolgt.

5. Reaktor nach einem der Ansprüche 1 bis 4, dadurch gekennzeichnet, dass die Zufuhrstellen (30) siphonartig ausgebildet sind.

6. Reaktor nach einem der Ansprüche 1 bis 5, dadurch gekennzeichnet, dass die Zufuhrstellen (30) jeweils eine oder mehrere Austrittsöffnungen (30') aufweisen und das erste Fluid (5) in Einbauten der Innenrohre (21, ... 24) zerkleinerbar ist, so dass das Fluid dispergiert in Form von kleinen Blasen (50) oder Tropfen mit dem anderen Fluid (6) Grenzflächen bildet.

7. Reaktor nach einem der Ansprüche 1 bis 6, dadurch gekennzeichnet, dass das zu dispergierende Fluid ein Gas (5), das andere Fluid eine Flüssigkeit (6) ist, dass die Zufuhrstellen (30) jeweils am Fuss des entsprechenden Innenrohrs (21, ... 24) angeordnet sind und dass mit einem solchen Blasenreaktor (1) insbesondere eine Gas-Flüssig-Reaktion durchführbar ist.

8. Reaktor nach einem der Ansprüche 1 bis 6, dadurch gekennzeichnet, dass das erste Fluid (5) und das zweite Fluid (6) Flüssigkeiten sind, die nicht ineinander löslich sind, und dass mit einem solchen Reaktor (1) insbesondere eine Flüssig-Flüssig-Extraktion durchführbar ist.

9. Verwendung eines Reaktors (1) gemäss einem der Ansprüche 1 bis 8 zum Durchführen von chemischen oder physikochemischen Prozessen, bei denen ein Stofftransport durch die Grenze zwischen zwei oder mehr Phasen erforderlich ist, insbesondere zum Durchführen von Strippungen.

10. Verwendung eines Reaktors gemäss Anspruch 7 zur Durchführung folgender Reaktionen: Oxidationen, insbesondere eine Sulfit-Oxidation, Ozonierungen, Chlorierungen, Hydrierungen, Phosgenierungen, eine Produktion von EDC, eine Produktion von Vynil-Chlor-Monomeren oder Reaktionen mit Mikroorganismen.
